Europäisches Patentamt

European Patent Office

Office européen des brevets

(11) Veröffentlichungsnummer: **0 490 167 A1**

# EUROPÄISCHE PATENTANMELDUNG

(21) Anmeldenummer: **91120230.7**

(22) Anmeldetag: **27.11.91**

(51) Int. Cl.5: **B65H 67/06**, H04B 5/00

(30) Priorität: **06.12.90 DE 4038970**

(43) Veröffentlichungstag der Anmeldung:
**17.06.92 Patentblatt 92/25**

(84) Benannte Vertragsstaaten:
**CH DE FR GB IT LI**

(71) Anmelder: **W. SCHLAFHORST AG & CO.**
**Blumenberger Strasse 143-145**
**W-4050 Mönchengladbach 1(DE)**

(72) Erfinder: **Hermanns, Ferdinand-Josef**
**Im Gerdeshahn 15**
**W-5140 Erkelenz(DE)**
Erfinder: **Rüge, Joachim, Dr.**
**Diltheystrasse 33**
**W-4050 Mönchengladbach 2(DE)**
Erfinder: **Breuer, Jürgen**
**Dechant-Stroux-Strasse 49**
**W-4060 Viersen 1(DE)**

(54) **Verfahren und Einrichtung zur bidirektionalen Datenübermittlung zwischen einer Textilmaschine und einem textilen Produkt.**

(57) Im Schreibteil einer der Textilmaschine (1, 2) zugeordneten Schreib-Leseeinrichtung (16) wird mit den binär kodierten Daten über Herkunft, Bestimmung, Produktbeschaffenheit und dergleichen eines textilen Produktes (3, 4) eine Trägerfrequenz moduliert, die drahtlos auf einen Chip (17) übertragen wird, der beispielsweise auf dem Transportmittel (6, 7) des textilen Produktes (3, 4) sitzt. Dort werden die trägerfrequenten Signale ausgesiebt und zur Stromversorgung eines in den Chip (17) enthaltenen, als Schreib-Lesespeicher ausgebildeten Datenspeichers und der mit dem Datenspeicher verbundenen elektronischen Schaltungskomponenten sowie gegebenenfalls zur Taktsteuerung verwendet. Die Daten werden dekodiert und binär im Datenspeicher gespeichert. Es ist eine an den Datenspeicher angeschlossene steuerbare Schaltlogik vorgesehen, die beim Auslesen der Daten aus dem Datenspeicher entsprechend der binären Kodierung einen Empfängerschwingkreis des Chips (17) verstimmt, so daß durch die dem Binärkode entsprechende Verstimmung des Empfängerschwingkreises in einem eingeschalteten, schwingenden Sendestromkreis der Schreib-Leseeinrichtung (16) eine Belastungsamplitudenmodulation hervorgerufen wird, die erfaßt und im Leseteil der Schreib-Leseeinrichtung (16) dekodiert wird.

Fig. 1

Die Erfindung betrifft ein Verfahren und eine Einrichtung nach dem beschreibenden Teil des Anspruchs 1 beziehungsweise 3.

Durch die DE 37 32 367 A 1 ist ein Verfahren und eine Vorrichtung zum Vorbereiten eines nachfolgenden Behandlungsvorgang an einer Textilspule bekannt. An den Behandlungsstationen werden für nachfolgende Behandlungsvorgänge relevante Informationen als eine Binärinformation einem mit der Textilspule oder deren Hülse verbundenen, ladbaren beziehungsweise kodierbaren, lesbaren und löschbaren elektronischen Speicherchip eingeprägt. Bereits eingeprägte Informationen werden an der Behandlungsstation gelesen, entschlüsselt, zu Arbeitsanweisungen oder selbsttätig gesteuerten Arbeitsvorgängen zum Weiterbehandeln der Textilspule verarbeitet, gegebenenfalls gelöscht und durch andere oder weitere, sich aus dem jeweiligen Behandlungsvorgang ergebende Informationen ersetzt beziehungsweise ergänzt. Die Hülse hat beispielsweise ringförmige Kontakte, die mit dem elektronischen Speicherchip verbunden sind und an die Kodierer und Dekoder mechanisch angeschlossen werden können.

Verfahren und Vorrichtung erfordern den unmittelbaren Kontakt zwischen der Behandlungsstation und dem textilen Produkt. Dies ist nur mit großem Aufwand zu verwirklichen, wobei aber stets mit Kontaktstörungen gerechnet werden muß.

Durch die DE 38 41 464 A 1 ist eine Textilmaschine mit Aggregaten zur Wartung und/oder Bedienung der Arbeitseinheiten bekannt. Arbeitseinheiten und Aggregate sind mit gemeinsamen Einrichtungen zum Ruf, zum Empfang des Rufes, zur Dialogführung und zur streuungsarmen, bidirektionalen drahtlosen Datenübermittlung versehen. Diese Einrichtungen sind wegen ihrer Größe und wegen ihres erforderlichen erheblichen Aufwands zum gesicherten Betrieb und zur Stromversorgung nicht gut zur Anordnung an einem textilen Produkt oder dessen Transportmittel, beispielsweise einer Spulenhülse oder einem Hülsenträger, geeignet.

Der Erfindung liegt die Aufgabe zugrunde, ein wirtschaftlich tragbares, effizientes Kommunikationssystem zwischen Aggregaten einer Textilmaschine und den gegebenenfalls in großer Stückzahl vorhandenen einzelnen textilen Produkten oder ihren Transportmitteln zu schaffen.

Diese Aufgabe wird gemäß der Erfindung durch ein im Anspruch 1 beschriebenes Verfahren beziehungsweise eine im Anspruch 3 beschriebene Einrichtung gelöst. Vorteilhafte Weiterbildungen sind in den Unteransprüchen beschrieben.

Die Vorteile des neuen Verfahrens und der neuen Einrichtung liegen insbesondere in der hohen Funktionssicherheit, der preiswerten Ausbildung des mobilen Informationsträgers, dem problemlosen Zugriff auf den Speicherinhalt des Informationsträger und dem insgesamt niedrigen technischen Aufwand, wobei zu berücksichtigen ist, daß Teilaufgaben durch einen an modernen Textilmaschinen ohnehin vorhandenen Rechner wahrgenommen werden können. Gleichzeitig mit der Dateneingabe kann der Speicherinhalt abgefragt werden.

Der Einsatz des neuen Verfahrens und der neuen Einrichtung ist insbesondere an Spinnmaschinen, Spulmaschinen sowie an Verbundsystemen derartiger Textilmaschinen miteinander oder mit zugeordneten Aggregaten vorgesehen. Demgemäß kommen als textile Produkte vor allem Textilspulen und deren Transportmittel in Frage. Dies schließt die Anwendung der Erfindung an anderen Textilmaschinen und an anderen Textilprodukten jedoch nicht aus.

Anhand eines zeichnerisch dargestellten Ausführungsbeispiels wird die Erfindung noch näher erläutert und beschrieben.

Fig. 1      zeigt ein Verbundsystem von Textilmaschinen und zugeordneten Aggregaten.

Fig. 2      zeigt das Blockschaltbild einer den Datenspeicher enthaltenden elektronischen Schaltungsanordnung.

Fig. 3      zeigt das Blockschaltbild einer Schreib-Leseeinrichtung.

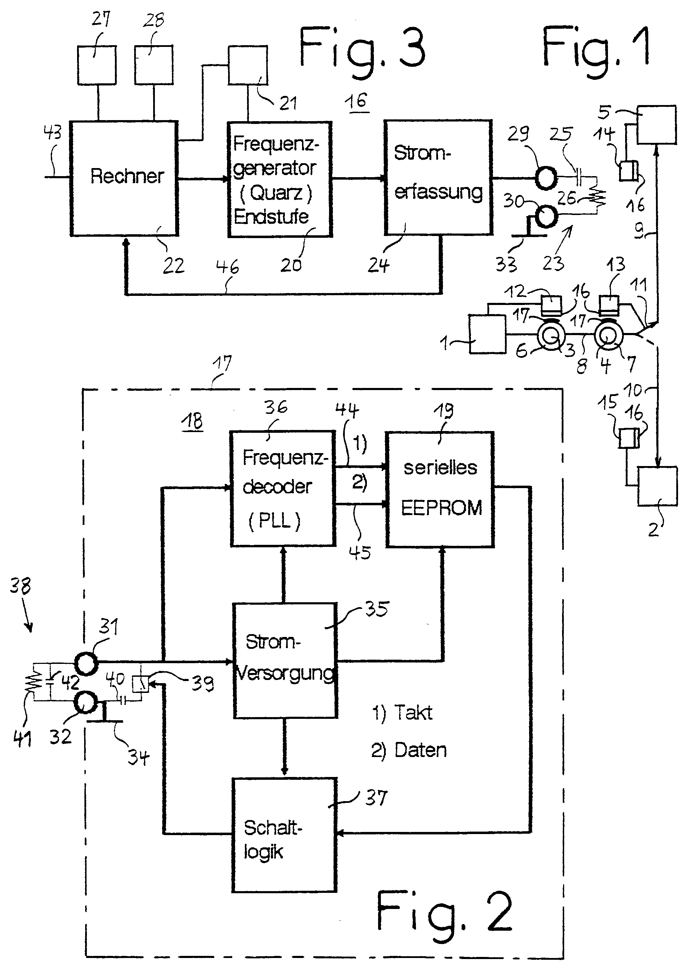

Nach Fig. 1 werden in einer ersten Textilmaschine 1 Garnspulen 3, 4 hergestellt, die wahlweise in einer zweiten Textilmaschine 2 weiterverarbeitet oder in einem Spulenspeicher 5 zwischengelagert werden sollen. Die auf tellerförmige Transportmittel 6, 7 aufgesteckten Garnspulen 3, 4 werden von der ersten Textilmaschine 1 aus längs einer ersten Transportbahn 8 zu einer steuerbaren Weiche 11 geschickt. Je nach Stellung der Weiche 11 wandern die Garnspulen 3, 4 dann entweder längs einer zweiten Transportbahn 9 zum Spulenspeicher 5 oder längs einer dritten Transportbahn 10 zur zweiten Textilmaschine 2.

Bei der ersten Textilmaschine 1 handelt es sich beispielsweise um eine Kopse herstellende Spinnmaschine, bei der zweiten Textilmaschine 2 um eine diese Kopse zu Kreuzspulen verarbeitende Spulmaschine.

Längs der Transportbahnen 8, 9, 10 sind Aggregate 12 bis 15 angeordnet. Das Aggregat 12 ist ein Teilaggregat der ersten Textilmaschine 1, das Aggregat 15 ein Teilaggregat der zweiten Textilmaschine 2. Das Aggregat 13 dient dem Sortieren, Leiten und Transportieren der Spulen 3, 4 insofern, als es feststellt, wohin die einzelne Spule gehört und danach die Weiche 11 stellt. Das Aggregat 14 stellt fest, zu welchem Lagerplatz des Spulenspeichers 5 die einzelene Spule geleitet werden muß und teilt dies dem Spulenspeicher 5 mit, der entsprechend arbeiten kann, beispielsweise Weichen stellt oder Transportmittel betätigt.

Jedes Aggregat 12 bis 15 ist mit einer der in Fig. 3 schematisch dargestellten Schreib-Leseeinrichtungen 16 versehen. Auf jedes der Transportmittel 6, 7 ist ein Chip 17 aufgeklebt, der die in Fig. 2 dargestellte elektronische Schaltungsanordnung 18 enthält, die auch den als serielles EEPROM ausgebildeten Datenspeicher 19 umfaßt.

Das Teilaggregat 12 hat insbesondere die Aufgabe, dem Datenspeicher 19 der einzelnen Spule 3, 4 Daten über Herkunft, Bestimmung und Produktbeschaffenheit der Spule, gegebenenfalls auch andere relevante Daten einzuprägen. Obwohl Fig. 1 nur ein der Textilmaschine 1 zugeordnetes Aggregat 12 zeigt, ist es prinzipiell nicht ausgeschlossen, daß jede einzelene Spinnstelle beziehungsweise Arbeitsstelle der Textilmaschine 1 ein gleichartiges zugeordnetes Aggregat 12 aufweist.

Die übrigen Aggregate 13 bis 15 dienen im wesentlichen dazu, mit Hilfe ihrer Schreib-Leseeinrichtung 16 die in den Datenspeicher 19 eingespeicherten Daten zu lesen und zu entschlüsseln und dementsprechend Meldungen beziehungsweise Handlungen vorzunehmen, die Spulenträger beispielsweise entsprechend zu leiten. Das Aggregat 15 übernimmt zusätzlich die Aufgabe, Informationen über die Produktbeschaffenheit der einzelnen Spulen an die zum Umspulen vorgesehenen Spulstellen der Textilmaschine 2 zu melden, damit dort eine gesonderte Behandlung der abzuwickelnden Spulen nach Garnart und Qualitätsmerkmalen vorgenommen werden kann. Gleichzeitig können die Aggregate 13 bis 15 aber auch Daten an die Chips 17 übermitteln.

Nach Fig. 3 besitzt die Schreib-Leseeinrichtung 16 einen mit einer Endstufe versehenen Oszillator 20 zum Erzeugen einer Trägerfrequenz, einen an den Oszillator 20 angeschlossenen Modulator 21 zum Modulieren der Trägerfrequenz entsprechend den durch einen Rechner 22 binär kodierten Daten, einen Sende- und Empfangsschwingkreis 23, eine Stromerfassungseinheit 24 zum Erfassen der Strombelastung des Sende- und Empfangsschwingkreises 23 sowie den mit diesen Einheiten 20, 21, 24, 23 verbundenen, bereits erwähnten Rechner 22.

Der Schwingkreis 23 ist hier als ein die Qualität des Datenaustausches steigernder Reihenschwingkreis ausgebildet und weist einen Kondensator 25 und eine Sende- und Empfangsspule 26 auf. Sie dient insbesondere zum Senden der modulierten Trägerfrequenz über kurze Entfernungen von bis zu 3 cm.

Der Rechner 22 enthält unter anderem eine Kodier- und Dekodierschaltung. Alternativ können aber ein besonderer Kodierer 27 und ein besonderer Dekodierer 28 an den Rechner angeschlossen werden.

Fig. 3 zeigt, daß die einzelnen Elemente der Schreib-Leseeinrichtung 16 durch Leitungsverbindungen miteinander verbunden sind. Der Schwingkreis 23 ist über die Stromerfassungseinheit 24 und eine Schnittstelle 29 mit dem die Endstufe enthaltenden Frequenzgenerator beziehungsweise Oszillator 20 verbunden. Über eine weitere Schnittstelle 30 ist der Schwingkreis 23 an einen Massepunkt 33 gelegt.

Der Datenspeicher 19 ist nach Fig. 2 mit einer Stromversorgungseinheit 35, einem Dekoder 36 und einer Schaltlogik 37 verbunden. Ein Empfängerschwingkreis 38 ist über eine Schnittstelle 31 sowohl mit dem Dekoder 36 als auch mit der Stromversorgungseinheit 35 verbunden. Die Stromversorgungseinheit 35 besitzt eine hier nicht näher abgebildete Filterschaltung zum Ausfiltern und Gleichrichten der empfangenen Trägerfrequenz zwecks Verwendung der empfangenen Sendeenergie als Versorgungsstromquelle für den Datenspeicher 19, den Dekoder 36 und die Schaltlogik 37.

Die Schnittstelle 31 ist über eine Schalteinrichtung 39 und einen Kondensator 40 mit einer zweiten Schnittstelle 32 verbunden. Der hier als Parallelschwingkreis ausgebildete Empfängerschwingkreis 38 mit seiner Spule 41 und seinem Kondensator 42 ist an die beiden Schnittstellen 31 und 32 angeschlossen. Die Schnittstelle 32 ist außerdem mit einem Massepunkt 34 verbunden.

Die Schalteinrichtung 39 dient dem gesteuerten Verändern der Kapazität des Empfängerschwingkreises 38. Diese Schalteinrichtung 39 ist mit der den Datenspeicher 19 abfragenden Schaltlogik 37 verbunden. Der Kondensator 40 dient als eine durch die an die Schaltlogik angeschlossene Schalteinrichtung 39 im Takt der Kodierung zuschaltbare Zusatzkapazität für den Schwingkreis 38. Der Dekoder 36 ist für eine PLL-Dekodierung (phase locked loop decoding) ausgebildet, was in diesem Fall besonders vorteilhaft ist.

Die kompakte Einheit 17 beziehungsweise der Chip ist so weit miniaturisiert, daß er auf einem flexiblen Blättchen Platz hat, das auf die tellerartigen Transportmittel 6, 7 aufgeklebt werden kann, wie es Fig. 1 andeutet.

Die Schreib-Leseeinrichtungen 16 sind so nahe an den Transportbahnen 8, 9, 10 angeordnet, daß die Spulen 26 ihrer Reihenschwingkreise 23 einen Abstand von maximal 3 cm von den Spulen 41 der Parallelschwingkreise 38 der elektronischen Schaltungsanordnung 18 haben, wenn ein mit einer Spule 3, 4 bestücktes Transportmittel 6, 7 nahe an der Einrichtung 16 vorbeiwandert beziehungsweise dort kurzzeitig anhält.

Der gewünschte Datenaustausch geschieht zum Zeitpunkt der größten Annäherung in sehr kurzer Zeit auf folgende Weise:

In dem im wesentlichen aus Rechner 22, Modulator 21 und Oszillator 20 mit Endstufe bestehenden Schreibteil der Schreib-Leseeinrichtung 16 wird mit den beispielsweise über eine Leitung 43 dem Rechner 22 zunächst mitgeteilten, schließlich binär kodierten Daten eine Trägerfrequenz moduliert, die über die Spule 26 des Reihenschwingkreises 23 abgestrahlt wird.

Der Parallelschwingkreis 38 der elektronischen Schaltungsanordnung 18 ist ständig empfangsbereit. Seine Spule 41 empfängt die ausgesendeten Signale drahtlos über kurze Distanz. Mit Hilfe der Schaltungsanordnung 18 werden in der Stromversorgungseinheit 35 beispielsweise durch eine Siebkette aus den empfangenen elektromagnetischen Signalen die trägerfrequenten Signale ausgesiebt und zur Stromversorgung des Datenspeichers 19, des Dekoders 36 und der Schaltlogik 37, wie bereits erwähnt, verwendet. Solange trägerfrequente Signale empfangen werden, ist die Stromversorgung auf diese Weise gesichert. Außerhalb der Empfangszeiten kann eine Stromversorgung durch einen Kurzzeitspeicher gewährleistet werden, beispielsweise mittels eines während der Empfangszeit aufzuladenden Kondensators.

Die modulierten trägerfrequenten Signale gelangen aber auch zum Dekoder 36, der beispielsweise über eine Leitung 44 die Taktsignale und über eine zweite Leitung 45 die als entschlüsselte binäre Signale vorliegenden Daten an den Datenspeicher 19 weitergibt.

Die Schaltlogik 37 kann so eingerichtet sein, daß sie ständig, und zwar auch dann, wenn Daten eingegeben werden, in zyklischer Wiederholung die im Datenspeicher 19 gespeicherten, binär kodierten Daten abfragt und dementsprechend in rascher Folge entsprechend der Kodierung des Speichers den Schalter 39 ein- und ausschaltet. Die PLL-Dekodierung wird hierdurch nicht beeinträchtigt. Bei dem Schalter 39 handelt es sich um ein elektronisches Schaltglied sehr kleiner Zeitkonstante. Hierdurch wird der Parallelschwingkreis 38 ständig im Takt der Daten verstimmt. Er erfährt eine gesteuerte Resonanzfrequenzverschiebung und Schwingkreisgüteveränderung. Dies behindert nicht die auch hierzu parallellaufend mögliche Datenübertragung von der Schreib-Leseeinrichtung 16 zum Datenspeicher 19. Der zum Schreibteil der Schreib-Leseeinrichtung 16 zählende Modulator 21 ist beispielsweise für eine FSK-Modulation (frequency shift keying modulation) eingerichtet.

Zum Leseteil der Schreib-Leseeinrichtung 16 ist insbesondere die Stromerfassungseinheit 24 und selbstverständlich auch der Rechner 22 zu zählen. Es besteht eine unmittelbare Rückverbindung 46 von der Stromerfassungseinheit 24 zum Rechner 22. Sollen lediglich Daten gelesen werden, so bleibt die im Oszillator 20 erzeugte Frequenz unmoduliert. Wegen der Kopplung der beiden Schwingkreise 23 und 38 erzeugt die getaktete Verstimmung des Empfängerschwingkreises 38 im eingeschalteten, schwingenden Sendestromkreis 23 eine Belastungsamplitudenmodulation, die in der Stromerfassungseinheit 24 erfaßt, über die Rückverbindung 46 dem Rechner 22 mitgeteilt und dort in einer Dekodierschaltung oder in dem angeschlossenen Dekodierer 28 entschlüsselt wird. Die Daten können dann über die Leitung 43 ausgegeben werden, beispielsweise an die zuständigen Textilmaschinen, an Alarmgeräte, Anzeigegeräte, Drucker oder andere einschlägige Peripheriegeräte eines Rechners.

Alternativ kann vorgesehen sein, die Schaltlogik nur zu bestimmten, gewünschten Zeiten zum Abfragen des Datenspeichers 19 anzuregen, beispielsweise durch besonders gesendete Abfrageimpulse. Hierzu könnte die Schaltlogik beispielsweise auch eine direkte Verbindung zum Dekoder 36 erhalten.

**Patentansprüche**

1.   Verfahren zur bidirektionalen drahtlosen Datenübermittlung von Daten über Herkunft, Bestimmung, Produktbeschaffenheit oder anderen relevanten Daten eines textilen Produktes zwischen einem das textile Produkt herstellenden, bearbeitenden, verarbeitenden, umarbeitenden, sortierenden, speichernden, transportierenden, leitenden oder sonswie behandelnden Aggregat, Teilaggregat oder zugeordneten Aggregat einer Textilmaschine und dem textilen Produkt oder seinem Transportmittel, wobei das Aggregat, Teilaggregat oder zugeordnete Aggregat eine elektronische Schreib-Leseeinrichtung und das textile Produkt oder dessen Transportmittel einen elektronischen veränderbaren Datenspeicher aufweist,

    **dadurch gekennzeichnet,**
daß im Schreibteil der Schreib-Leseeinrichtung mit den binär kodierten Daten eine Trägerfrequenz moduliert wird, daß die modulierte Trägerfrequenz über eine Sende- und Empfangsspule mit einer bevorzugten maximalen Reichweite im Millimeter- bis Zentimeterbereich elektromagnetisch drahtlos an einen mit dem textilen Produkt oder dessen Transportmittel verbundenen Empfängerschwingkreis übertragen wird, daß aus den empfangenen elektromagnetischen Signalen die trägerfrequenten Signale ausgesiebt und zur Stromversorgung des als Schreib-Lesespeicher ausgebildeten Datenspeichers und der mit dem Datenspeicher verbundenen elektronischen Schaltungskomponenten sowie gegebenenfalls zur Taktsteuerung verwendet wird, daß die Daten dekodiert und binär im Datenspeicher gespeichert werden, daß eine an den Datenspeicher angeschlossene steuerbare Schaltlogik vorgesehen ist, die beim gegebenenfalls auch während des Datenempfangs erfolgenden Auslesen der Daten aus dem Datenspeicher entsprechend seiner binären Kodierung den Empfängerschwingkreis verstimmt, und daß durch die dem Binärkode entsprechende Verstimmung des Empfängerschwingkreises im eingeschalteten, schwingenden Sendestromkreis eine Belastungsamplitudenmodulation hervorgerufen wird, die erfaßt und im Leseteil der Schreib-Leseeinrichtung dekodiert wird.

2. Verfahren nach Anspruch 1, dadurch gekennzeichnet, daß im Empfängerschwingkreis durch gesteuertes Schalten einer Kapazität, einer Induktivität oder eines Widerstandes entsprechend der binären Kodierung des Datenspeichers eine gesteuerte Resonanzfrequenzverschiebung und/oder Schwingkreisgüteveränderung hervorgerufen wird, die sich in dem angekoppelten Sendeschwingkreis der Schreib-Leseeinrichtung als eine Änderung der Amplitude des Belastungsstromes bemerkbar macht.

3. Einrichtung mit den Merkmalen des beschreibenden Teils des Anspruchs 1, zum Ausführen des Verfahrens nach Anspruch 1 oder 2, dadurch gekennzeichnet, daß die Schreib-Leseeinrichtung (16) einen Oszillator (20) zum Erzeugen der Trägerfrequenz, einen Modulator (21) zum Modulieren der Trägerfrequenz im Takt der binär kodierten Daten, gegebenenfalls einen diese Kodierung ausführenden Kodierer (22), einen Sende- und Empfangsschwingkreis (23) mit einer Sende- und Empfangsspule (26) zum Senden der modulierten Trägerfrequenz, eine Stromerfassungseinheit (24) zum Erfassen der Strombelastung des Sende- und Empfangskreises (23) sowie einen mit diesen Einheiten (20, 21, 24, 23) verbundenen Prozessor oder Rechner (22) aufweist, der eine Kodier- und Dekodierschaltung besitzt und an den gegebenenfalls eine Dekodierer (28) und/oder Kodierer (27) angeschlossen ist, daß der Datenspeicher (19) des textilen Produktes (3, 4) oder ihres Transportmittels (6, 7) als ein Schreib-Lesespeicher ausgebildet ist, der mit einer Stromversorgungseinrichtung (35), einem Dekoder (36) und einer Schaltlogik (37) verbunden ist, daß ein Empfängerschwingkreis (38) sowohl mit dem Dekoder (36) als auch mit der Stromversorgungseinrichtung (35) verbunden ist, daß die Stromversorgungseinrichtung (35) eine Filterschaltung zum Ausfiltern und Gleichrichten der empfangenen Trägerfrequenz zwecks Verwendung der empfangenen Sendeenergie als Versorgungsstromquelle besitzt, daß eine Schalteinrichtung (39) zum gesteuerten Verändern der Induktivität oder Kapazität des Empfängerschwingkreises (38) vorhanden ist und daß diese Schalteinrichtung mit der den Datenspeicher (19) abfragenden Schaltlogik (37) verbunden ist.

4. Einrichtung nach Anspruch 3, dadurch gekennzeichnet, daß der Sende- und Empfangsschwingkreis (23) der Schreib-Leseeinrichtung (16) als Reihenschwingkreis ausgebildet ist.

5. Einrichtung nach Anspruch 3 oder 4, dadurch gekennzeichnet, daß der Empfängerschwingkreis (38) der den Datenspeicher (19) enthaltenden elektronischen Schaltungsanordnung (18) als Parallelschwingkreis ausgebildet ist.

6. Einrichtung nach einem der Ansprüche 3 bis 5, dadurch gekennzeichnet, daß der Empfängerschwingkreis (38) der den Datenspeicher (19) enthaltenden elektronischen Schaltungsanordnung (18) eine durch die an die Schaltlogik (37) angeschlossene Schalteinrichtung (39) entsprechend der Kodierung des Speichers (19) schaltbare Zusatzkapazität (40), Zusatzinduktivität oder einen zuschaltbaren Widerstand aufweist.

7. Einrichtung nach einem der Ansprüche 3 bis 6, dadurch gekennzeichnet, daR der Datenspeicher (19) als serielles EEPROM (elektrisch löschbarer Schreib-Lesespeicher) ausgebildet ist.

8. Einrichtung nach einem der Ansprüche 3 bis 7, dadurch gekennzeichnet, daR der Modulator (21) für eine FSK-Modulation (frequency shift keying modulation) eingerichtet ist.

9. Einrichtung nach einem der Ansprüche 3 bis 8, dadurch gekennzeichnet, daß der Dekoder (36) für eine PLL-Dekodierung (phase locked loop decoding) ausgebildet ist.

10. Einrichtung nach einem der Ansprüche 3 bis 9, dadurch gekennzeichnet, daß zumindest der Datenspeicher (19) der Dekoder (36), die Stromversorgungseinheit (35) und die Schaltlogik (37) zu einer miniaturisierten, kompakten Einheit (17) (chip) vereinigt sind.

Fig. 3

Fig. 1

Fig. 2

1) Takt

2) Daten

### Europäisches Patentamt

# EUROPÄISCHER RECHERCHENBERICHT

Nummer der Anmeldung

EP    91 12 0230

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 941 201 (DAVIS)<br><br>* Spalte 2, Zeile 35 - Zeile 59 *<br>* Spalte 6, Zeile 46 - Zeile 54 *<br>* Spalte 8, Zeile 29 - Zeile 37 *<br>* Spalte 10, Zeile 54 - Spalte 11, Zeile 8 *<br>--- | 1-3,5,7,<br>9,10 | B65H67/06<br>H04B5/00 |
| X | DE-A-3 802 061 (TOKYO KEIKI CO.,LTD.)<br><br>* Spalte 4, Zeile 56 - Spalte 6, Zeile 4;<br>Anspruch 1 *<br>--- | 1-3,7,8,<br>10 | |
| A,D | DE-A-3 732 367 (W. SCHLAFHORST AG & CO)<br>* Spalte 3, Zeile 34 - Spalte 4, Zeile 36 *<br>--- | 1 | |
| A,D | DE-A-3 841 464 (W. SCHLAFHORST AG & CO)<br>* Zusammenfassung *<br>--- | 1-10 | |
| A | DE-A-3 402 331 (LICENTIA PATENT-VERWALTUNGS-GMBH<br>)<br>* Anspruch 1 *<br><br>----- | 1,4 | |

**RECHERCHIERTE SACHGEBIETE (Int. Cl.5)**

B65H
H04B
D01H
G06K

Der vorliegende Recherchenbericht wurde für alle Patentansprüche erstellt

| Recherchenort | Abschlußdatum der Recherche | Prüfer |
|---|---|---|
| DEN HAAG | 06 APRIL 1992 | TAMME H.-M.N. |